# EUROPÄISCHE PATENTSCHRIFT

(11) **EP 3 747 734 B1**
(45) Veröffentlichungstag und Bekanntmachung des Hinweises auf die Patenterteilung: **31.05.2023**
(21) Anmeldenummer: 20174813.4
(22) Anmeldetag: 14.05.2020
(51) Int. Cl.: B62D 15/02, B62D 3/12, B62D 5/04

(54) **ERMITTELN EINER LENKPOSITION BEI EINEM FAHRZEUGLENKSYSTEM MIT VARIABLER ÜBERSETZUNG**
STEERING POSITION DETECTION IN A VEHICLE STEERING SYSTEM WITH VARIABLE TRANSMISSION RATIO
DÉTERMINATION D'UNE POSITION DE DIRECTION DANS UN SYSTÈME DE DIRECTION DE VÉHICULE À ENGRENAGE VARIABLE

(30) Priorität: 05.06.2019 DE 102019208140
(43) Veröffentlichungstag der Anmeldung: 09.12.2020
(73) Patentinhaber: VOLKSWAGEN AG, 38440 Wolfsburg (DE)
(72) Erfinder: Stoltze, Lars, 38165 Lehre (DE); Orth, Bastian, 38165 Lehre (DE)

(56) Entgegenhaltungen:
- DE-A1-102008 054 823
- FR-A1- 3 065 937
- JP-A- 2019 043 398

## Beschreibung

Die Erfindung betrifft ein Verfahren zum Ermitteln einer Lenkposition bei einem Fahrzeuglenksystem mit variabler Übersetzung und ein Fahrzeuglenksystem. Insbesondere betrifft die Erfindung das Gebiet von motorisch unterstützten Fahrzeuglenksystemen (Servomotor-Lenkungen), bei der zusätzlich zu einem vom Fahrer aufgebrachten Handlenkmoment auch eine elektromotorische Betätigungskraft zur Fahrzeuglenkung erzeugt wird.

Es ist bekannt, Fahrzeuglenksysteme zumindest teilweise elektromotorisch zu betreiben, beispielsweise um einen Fahrer bei Lenkvorgängen zu unterstützen oder um fahrerautonome Lenkeingriffe vorzunehmen, beispielsweise von Fahrerassistenzsystemen. Allgemein kann ein Fahrer dabei über eine Lenkhandhabe, die eine Lenkeingangswelle umfasst oder mit dieser verbunden ist, ein Handlenkmoment erzeugen. Dieses kann über eine Getriebestufe (zum Beispiel umfassend wenigstens ein Ritzel) auf ein Betätigungsglied aufgebracht werden, wobei es sich im Regelfall um eine Zahnstange handelt. Die Getriebestufe kann folglich durch den Eingriff des Ritzels der Lenkeingangswelle in die Verzahnung der Zahnstange gebildet werden.

Weiter ist es bekannt, dass diese Getriebestufe eine variable Übersetzung aufweisen kann. Hierunter ist zu verstehen, dass positionsabhängig unterschiedliche Übersetzungen vorgesehen sein können. Die Position kann sich dabei auf eine Position des Ritzels entlang der Zahnstange und/oder Verzahnungsstrecke beziehen oder alternativ auf eine Position des Ritzels innerhalb eines Bewegungsspektrums des Betätigungsglieds. Dies hat zur Folge, dass je nach Winkelstellung der Lenkeingangswelle (das heißt je nach aktuellem Lenkhandhabe-Winkel) ein andersartiges Übersetzungsverhältnis vorliegen kann. Hierdurch kann zum Beispiel erreicht werden, dass aus Sicht des Fahrers je nach Winkelstellung der Lenkhandhabe unterschiedliche Kräfte aufgebracht werden müssen, um Radlenkwinkel des Fahrzeugs einzustellen. Anders ausgedrückt kann über die variable Übersetzung also ein bestimmtes Lenkgefühl und/oder Lenkverhalten des Fahrzeugs eingestellt werden.

Zusätzlich kann auch ein Lenkunterstützungsmotor (zum Beispiel ein Servomotor) zumindest mittelbar auf das Betätigungsglied eine Unterstützungskraft aufbringen. Hierdurch kann der Fahrer davon entlastet werden, sämtliche Kräfte zum Bewegen des Betätigungsgliedes selbst aufbringen zu müssen.

In verschiedenen Zusammenhängen ist es relevant, eine Lenkposition des Fahrzeuglenksystems möglichst genau bestimmen zu können. Hierunter kann zum Beispiel eine Position des Betätigungsgliedes (insbesondere der Zahnstange) verstanden werden, zum Beispiel in Bezug auf einen Ursprungszustand, der einer Geradeausfahrt entspricht. Auch eine Position des Betätigungsglieds (z.B. eines Zentrums hiervon) relativ zum Ritzel kann als Lenkposition definiert werden. Beispielsweise wird die Lenkposition von verschiedenen Fahrerassistenzsystemen benötigt und/oder allgemein von dem Fahrzeuglenksystem, um fahrerautonome Lenkeingriffe zum Beispiel von Fahrerassistenzsystemen möglichst genau umsetzen zu können.

Es existieren verschiedene Lösungen, um die Lenkposition insbesondere sensorisch zu erfassen. Diese zeichnen sich jedoch oftmals durch zu hohe Kosten aus oder aber durch eine zu geringe Genauigkeit. Beispielsweise können an verschiedenen Positionen innerhalb des Fahrzeuglenksystem absolut messende Sensoren bzw. Winkelgeber eingesetzt werden, beispielsweise in Form eines absoluten Lenkwinkelsensors an der Lenkeingangswelle. Derartige absolute Sensoren sind jedoch vergleichsweise teuer. Zudem kann es dabei erforderlich sein, eine (Fahrzeug-) modellbasierte Plausibilisierung des Messwerts dieses Sensors vorzunehmen. Letzteres kann aber erst zeitverzögert möglich sein und/oder erst wenn vorbestimmte Fahrsituationen vorliegen. Dadurch, dass Lenkhandhaben auch mehrfache vollständige Umdrehungen durchlaufen können (das heißt um mehr als 360° in eine Richtung ausgelenkt werden können) ergeben sich zusätzliche Herausforderungen an absolut messende Sensoren, wie zum Beispiel das Vorsehen vorstehend erwähnter modellbasierter Plausibilisierungen, die mit zusätzlichen Kosten verbunden sind. Dies gilt auch für sogenannte "true-power-on"-Sensoren, die zum Beispiel trotz ausgeschaltetem Fahrzeug bei Bewegungen des Lenksystems eingeschaltet werden und somit einen Initialisierungszustand beibehalten können. In diesem Fall ist es insbesondere erforderlich, für eine ununterbrochene Spannungsversorgung dieser Sensoren zu sorgen, was aufwendig und fehleranfällig ist.

Aus der DE 10 2008 054 823 A1 ist ein Lenksystem mit Winkelgebern an einer Lenkstange und an einem Motor, der eine Zahnstange betätigt, bekannt. Mittels dieser Anordnung soll die mechanische Mitte einer Zahnstange in Form eines Übersetzungstiefpunktes bestimmt werden.

Die JP 2019-043398 A offenbart eine Lenkungssteuervorrichtung zum Bestimmen eines definierten Referenzwinkels.

Die Erfindung richtet sich demnach auf die Aufgabe, das Ermitteln einer Lenkposition bei einem Fahrzeuglenksystem mit variabler Übersetzung zu verbessern.

Diese Aufgabe wird durch ein Verfahren mit den Merkmalen von Anspruch 1 und ein Fahrzeuglenksystem mit den Merkmalen von Anspruch 10 gelöst. Vorteilhafte Weiterbildungen sind in den beigefügten abhängigen Ansprüchen angegeben. Es versteht sich, dass sämtliche vorstehenden Merkmale und Ausführungen auch bei der erfindungsgemäßen Lösung vorgesehen sein beziehungsweise auf diese zutreffen können, sofern nicht anders angegeben oder ersichtlich.

Allgemein richtet sich die Erfindung auf Kraftfahrzeuge und insbesondere Personenkraftwagen oder Lastkraftwagen. Ferner richtet sie sich insbesondere auf servo-unterstützte Fahrzeuglenksysteme, bei der aber ein mechanischer Eingriff einer Lenkeingangswelle beziehungsweise Lenkhandhabe und einem Betätigungsglied (zum Beispiel einer Zahnstange) aufrechterhalten wird. Somit richtet sich die Erfindung also nicht primär auf das Gebiet von sogenannten Steel-by-Wire-Fahrzeuglenksysteme, auch wenn sie dort prinzipiell eingesetzt werden kann.

Eine Grundidee der Erfindung besteht darin, im gesamten Bewegungsspielraum und z.B. auch bei Rotationen von mehr als 360°, statt absolut messender Winkelsensoren beziehungsweise Winkelgeber einfachere und z.B. lediglich relativ messende Winkelgeber zu verwenden. Der Unterschied zwischen absolut und relativ messenden Winkelgebern ist dem Fachmann prinzipiell geläufig. Relative Winkelgeber liefern von sich aus keine Messsignale, die unmittelbar einen absoluten Winkelwert (hierin auch als Winkelposition bezeichnet) unmittelbar angeben können. Stattdessen bedarf es in der Regel wenigstens einer Referenz und/oder wenigstens einem Index, um aus den Messwerten auf eine entsprechende absolute Winkelposition zu schließen. Ein Beispiel relativer Winkelgeber ist ein sogenannter Inkrementalgeber. Beispiele von relativen Winkelgebern sind auch Winkelgeber, die zwar über einen gewissen Bewegungsspielraum absolute Werte ausgeben können, nicht aber über das gesamte Bewegungsspektrum von zum Beispiel der Lenkeingangswelle (das heißt nicht über das vollständige zu messende Bewegungsspektrum). Beispielsweise kann es sich hierbei um absolute Winkelgeber handeln, die bei 360° oder auch einem kleineren Wert (zum Beispiel 40°) überlaufen. Ebenso können Winkelgeber zum Einsatz kommen, deren Messwerte zumindest teilweise nur bei einer notwendigen Qualifizierung zu absoluten Winkelpositionen umrechenbar sind. Bei der Qualifizierung, die auch als Plausibilisierung bezeichnet werden kann, kann es sich zum Beispiel um ein Fahrzeugmodell oder eine Kennlinie handeln.

Weiter können die Winkelgeber auch Indexsignalgeber sein (insbesondere sogenannte Single- oder Multi-Indexsignalgeber. Über den zu messenden Bewegungsspielraum können dabei einer (Single) oder mehrere (Multi) Indizes verteilt sein. Der Geber kann dann ermitteln, ob beziehungsweise welcher Index bereits überlenkt wurde sowie auch ein weiteres (relatives) Winkelpositionssignal als Messwert ermitteln. Daraus kann dann zum Beispiel ein Steuergerät die absolute Winkelposition berechnen.

Zusammengefasst kann es sich bei den Winkelgebern also bevorzugt um relative Winkelgeber handeln oder um Winkelgeber gemäß den vorstehend genannten Beispielen. Bevorzugt sind die Winkelgeber gleichartig ausgebildet (das heißt entsprechen jeweils dem gleichen Sensortyp). Sie können aber auch verschiedenartig sein, wobei bevorzugt Kombinationen aus den vorstehend genannten Sensortypen gebildet werden.

Den vorgestellten Winkelgeber-Varianten ist gemein, dass diese billiger als bisher rein absolut messende Verfahren sind.

Insbesondere liegt eine erfindungsgemäße Erkenntnis darin, dass mit zwei derartigen Winkelgebern, die an unterschiedlichen Positionen innerhalb des Fahrzeuglenksystems messen, ein Übersetzungsverhältnis ermittelt werden kann. Bevorzugt werden hierfür Änderungen der Messsignale betrachtet und wird beispielsweise durch einen Vergleich hiervon ein aktuell vorliegendes Übersetzungsverhältnis bestimmt. Dadurch, dass das Fahrzeuglenksystem sich durch eine variable Übersetzung auszeichnet, kann dann bestimmt werden, welchen Zustand dieses gerade einnimmt beziehungsweise welches Übersetzungsverhältnis gerade vorliegt und somit auch welche zum Beispiel Relativposition das Betätigungsglied und die Lenkeingangswelle gerade zueinander einnehmen (das heißt in welchem Eingriffszustand oder - bereich diese gerade miteinander stehen). Dies ermöglicht dann zum Beispiel eine Auslenkung des Betätigungsglieds und somit die aktuelle Lenkposition zu bestimmen, beispielsweise da die Lenkeingangswelle und dessen Ritzel typischerweise ortsfest sind und lediglich das Betätigungsglied relativ hierzu verschoben wird. Je nach verschobener Position liegt dann gemäß der variablen Übersetzung ein entsprechendes Übersetzungsverhältnis vor. Ist das Übersetzungsverhältnis jedoch nicht eindeutig einer bestimmten Lenkposition zuordenbar, beispielsweise da sich dasselbe Übersetzungsverhältnis mehrfach innerhalb des Bewegungsspielraums wiederholt, können zusätzliche Informationen berücksichtigt werden und kann eine vermutete Lenkposition durch zusätzliche Betrachtungen plausibilisiert werden. Beispiele hierfür werden nachstehend erläutert.

Wie erwähnt, ist ein wesentlicher Vorteil der Erfindung in der kostengünstigen und dennoch präzisen Ermittlung der Lenkposition zu sehen, da vorzugsweise vergleichsweise günstige Sensoren verwendet werden, um das Übersetzungsverhältnis und dann eine hiermit zusammenhängende aktuelle Lenkposition zu bestimmen.

Im Detail schlägt die Erfindung ein Verfahren zum Ermitteln einer Lenkposition bei einem Fahrzeuglenksystem mit variabler Übersetzung vor, wobei das Fahrzeuglenksystem folgendes umfasst:
- eine Lenkeingangswelle, mit der ein Handlenkmoment des Fahrers auf ein mit den Fahrzeugrädern gekoppeltes Betätigungsglied aufbringbar ist, wobei die Lenkeingangswelle und das Betätigungsglied über eine Getriebestufe mit einer variablen Übersetzung miteinander gekoppelt sind;
- einen Lenkunterstützungsmotor, der dazu eingerichtet ist, eine Unterstützungskraft auf das Betätigungsglied aufzubringen;
- einen ersten Winkelgeber zum Ermitteln einer Winkelposition der Lenkeingangswelle;
- einen zweiten Winkelgeber zum Ermitteln einer Winkelposition des Lenkunterstützungsmotors,
mit:
- Erhalten von Messwerten von dem ersten Winkelgeber und von dem zweiten Winkelgeber,
   wobei aus den Messwerten ein aktuelles Übersetzungsverhältnis ableitbar ist;
- Ermitteln der Lenkposition anhand der Messwerte.

Die Lenkeingangswelle kann von einer Lenkhandhabe umfasst oder hiermit verbunden sein, wobei es sich bei der Lenkhandhabe bevorzugt um ein Lenkrad handelt. Die Getriebestufe kann eine Verzahnung umfassen. Das Betätigungsglied ist bevorzugt eine Zahnstange, die mit den Fahrzeugrädern gekoppelt ist und diese nach Maßgabe von im Wesentlichen quer zu einer Fahrzeuglängsachse erfolgenden Verlagerung der Zahnstange auslenken kann. Die Lenkeingangswelle kann ein Ritzel umfassen, das in die Verzahnungen der Zahnstange eingreift. Zum Erzielen der variablen Übersetzung kann eine Verzahnung des Betätigungsglieds angepasst werden, um beispielsweise entlang einer Länge des Betätigungsglieds zu variieren (zum Beispiel durch variierende Abstände zwischen den Zähnen).

Der Lenkunterstützungsmotor kann ein Elektromotor und insbesondere ein Servomotor sein. Er kann auf beliebige Art mit dem Betätigungsglied zumindest mittelbar gekoppelt sein. Beispielsweise kann er über eine Mutter-Spindel-Kombination das Betätigungsglied antreiben und/oder ebenfalls in die Verzahnung des Betätigungsglieds eingreifen.

Der erste Winkelgeber kann nahe der Lenkeingangswelle, die allgemein auch als Lenksäule bezeichnet werden kann, positioniert sein und/oder diese direkt vermessen. Der zweite Winkelgeber kann zum Beispiel eine Ausgangswelle des Lenkunterstützungsmotors vermessen und/oder in den Lenkunterstützungsmotor integriert sein.

Die Verfahrensschritte können von einem Lenkungssteuergerät der nachstehend erläuterten Art durchgeführt werden. Die Messwerte können Winkelpositions-Messwerte sein. Das aktuelle Übersetzungsverhältnis kann aus einem Vergleich der Messwerte ermittelt werden und/oder aus einem in Verhältnissetzen hiervon. Beispielsweise kann dabei betrachtet werden, inwieweit eine Winkelpositionsänderung der Lenkeingangswelle in eine Winkelpositionsänderung des Lenkunterstützungsmotors umgesetzt wird (oder umgekehrt).

Vorzugsweise sind sowohl die Lenkeingangswelle als auch der Lenkunterstützungsmotor mechanisch mit der Getriebestufe und/oder dem Betätigungsglied und somit auch zumindest mittelbar miteinander gekoppelt. Änderungen in einer Position des Lenkunterstützungsmotors, zum Beispiel aufgrund eines aktiven Antreibens hiervon, können sich somit als Funktion des aktuellen Übersetzungsverhältnisses in entsprechenden Änderungen der Winkelposition der Lenkeingangswelle niederschlagen, was erfindungsgemäß ermittelt und zum Bestimmen des aktuellen Übersetzungsverhältnisses verwendet werden kann.

Zum Ermitteln der Lenkpositionen anhand des aktuellen Übersetzungsverhältnisses sind erfindungsgemäß Informationen hinterlegt, die den Zusammenhang zwischen dem Übersetzungs-verhältnis und einer eingenommenen Lenkposition vorzugsweise eindeutig definieren. Hierbei kann es sich zum Beispiel um Tabellenwerte, Funktionen oder vergleichbare Zusammenhänge handeln. Ist keine entsprechende eindeutige Zuordnung möglich, können in der nachstehend erwähnten Weise zusätzliche Informationen betrachtet werden, um eine eindeutige Zuordnung vornehmen zu können beziehungsweise eine vermutete Zuordnung zu plausibilisieren.

Wie erwähnt, kann es sich bei den Winkelgebern um relative Winkelgeber handeln. Es können aber auch absolute Winkelgeber vorgesehen sein. Insbesondere im letzteren Fall (aber nicht beschränkt hierauf) können die Winkelgeber gemäß einer weiteren Ausführungsform keine über den gesamten zu vermessenden Bewegungsspielraum (beziehungsweise zu vermessenden Winkelbereich) absolut messenden Winkelgeber sein. Dies ist insbesondere dann der Fall, wenn die Winkelgeber zwar absolut messen, nicht aber auch nach mehrfachen Umdrehungen um z.B. mehr als 360°entsprechende absolute Winkelpositionen ausgeben können (beziehungsweise diese Mehrfachumdrehungen nicht geeignet berücksichtigen können). In einem solchen Fall mehrfacher Umdrehungen ist der Bewegungsspielraum beziehungsweise der zu vermessende Winkelbereich größer als 360° anzusehen und die Winkelgeber, die derartige Mehrfachumdrehungen nicht berücksichtigen können, können nicht dazu eingerichtet sein, außerhalb eines Winkelbereichs von 360° eindeutige absolute Winkelpositionen zu bestimmen.

Wie erwähnt, kann gemäß einer weiteren Ausführungsform vorgesehen sein, dass das Übersetzungsverhältnis anhand eines Vergleichs der Messwerte beziehungsweise Winkelpositionen bestimmt wird, die von den unterschiedlichen Winkelgebern erhalten werden.

Erfindungsgemäß ist vorgesehen, dass von jedem Winkelgeber mehrere Messwerte (zum Beispiel innerhalb eines vorbestimmten Zeitintervalls) erhalten werden und das Übersetzungsverhältnis anhand einer Änderung der Messwerte (zum Beispiel innerhalb dieses Zeitintervalls) bestimmt wird. Anders ausgedrückt, können somit also Änderungen der Winkelpositionen, die von den einzelnen Winkelgebern ermittelt werden, betrachtet werden. Diese Änderungen können dann vorzugsweise einander gegenübergestellt und zum Beispiel miteinander verglichen werden. Das vorstehend erwähnte Zeitintervall kann kürzer als eine Sekunde sein und zum Beispiel wenige Millisekunden betreffen. Alternativ kann auch statt eines Zeitintervalls ein (Mindest-)Bewegungsbereich beziehungsweise (Mindest-)Winkelbereich betrachtet werden, der zurückgelegt werden muss. Beispielsweise können zum Ermitteln des Übersetzungsverhältnisses Änderungen der Winkelposition von wenigstens einem der Winkelgeber von mehr als ein Grad oder mehr als fünf Grad erforderlich sein, bevor das Übersetzungsverhältnis ermittelt wird. Bis entsprechende Winkelbereiche zurückgelegt sind und/oder Zeitintervalle abgelaufen sind, können jedoch die Messwerte aufgezeichnet werden.

Allgemein können anhand der Mehrzahl derartiger Messwerte auch Änderungen des aktuellen Übersetzungsverhältnisses ermittelt werden. Eine solche Änderung kann verwendet werden, um zum Beispiel Vergleiche mit Kennlinien des Übersetzungsverhältnisses und insbesondere einer lenkpositionsabhängigen Kennlinie des Übersetzungsverhältnisses durchzuführen. Beispielsweise können diese Änderungen anzeigen, ob das Übersetzungsverhältnis aktuell zunimmt oder abnimmt und bevorzugt auch, wie stark eine entsprechende Zu- oder Abnahme erfolgt. Dies kann dann mit einer vorab hinterlegten Kennlinie, die den Zusammenhang zwischen Übersetzungsverhältnis und Lenkposition beschreibt, verglichen werden, um sozusagen die aktuelle Lage des Übersetzungsverhältnisses innerhalb der Kennlinie sowie die damit zusammenhängende eingenommene Lenkposition zu ermitteln. Dies ist insbesondere dann relevant, wenn allein aus dem Übersetzungsverhältnis keine eindeutige Zuordnung zu einer Lenkposition möglich ist, da dieses Übersetzungsverhältnis mehrfach in dem gesamten möglichen Winkel- beziehungsweise Bewegungsspektrum des Betätigungsglieds vorkommt (zum Beispiel mehrfach innerhalb einer Kennlinie auftritt).

Gemäß einer Weiterbildung ist vorgesehen, dass die Lenkposition anhand eines Vergleichs des aktuellen Übersetzungsverhältnisses mit Informationen, die den Zusammenhang zwischen einer Lenkposition und Werten des Übersetzungsverhältnisses beschreiben, bestimmt wird. Diese hierin auch als Zusammenhangsinformationen bezeichneten Informationen können zum Beispiel vorab während der Fahrzeugentwicklung, während der Produktion oder vor Inbetriebnahme (zum Beispiel vor erstmaliger Inbetriebnahme oder nach einer Wartung) ermittelt werden. Insbesondere sind folgende Ermittlungsmöglichkeiten möglich:
- Die Informationen können zum Beispiel rechnerisch bestimmt werden und/oder per Simulation oder allgemein in der Fahrzeugentwicklung festgelegt werden. Sie können dann im Sinne festgelegter beziehungsweise nicht variabler Informationen in einer Speichereinrichtung des Fahrzeuglenksystems hinterlegt werden.
- Das Fahrzeuglenksystem kann während der Produktion und/oder vor Einbau in ein Fahrzeug vermessen werden. Insbesondere kann die Geometrie der Getriebestufe und insbesondere der Verzahnung des Betätigungsglieds vermessen werden. Zusätzlich oder alternativ kann auch die Einbauposition des Betätigungsgliedes bestimmt werden und/oder zumindest eine Relativposition hiervon zur Lenkeingangswelle in einer vorbestimmten Situation (zum Beispiel während einer Geradeausfahrt). Hieraus kann dann das Übersetzungsverhältnis ermittelt werden und auch, bei welchen Lenkpositionen welches Übersetzungsverhältnis vorliegt, was allgemein den erwähnten Zusammenhangsinformationen entsprechen kann.
- Das Fahrzeuglenksystem kann im zusammengebauten Zustand verwendet werden, um reale Lenkvorgänge durchzuführen. Dies kann im Rahmen eines sogenannten Anlernens erfolgen, bei dem sozusagen Online beziehungsweise während entsprechender Lenkvorgänge in Echtzeit die fraglichen Zusammenhangsinformationen ermittelt werden. Insbesondere kann während eines kompletten und/oder definierten Durchlenkens des gesamten Bewegungsspielraums des Fahrzeuglenksystems eine Messung der Winkelgebermesswerte sowie auch der dabei vorliegenden absoluten Lenkposition durch ein vorzugsweise externes Messgerät erfolgen und diese Informationen können dann abgespeichert werden.

Es ist auch möglich, einen Anlernvorgang der vorstehend erläuterten Art während der Laufzeit des Fahrzeugs (das heißt nach einer Auslieferung) vorzunehmen. Hierbei wird dann ohne definierten Durchlenk-Vorgang fortlaufend der vorstehend erwähnte Zusammenhang aus den Winkelgebermesswerten (und insbesondere Änderungen hiervon) und einer zumindest relativen Lenkposition ermittelt. Um eine absolut-Position der Lenkposition zu ermitteln können dann Referenzen berücksichtigt werden. Hierbei kann es sich zum Beispiel um einen Endanschlag der Lenkung handeln, um indexierte Positionen von insbesondere des lenksäulennahen Winkelgebers, eine Zahnstangen-Position mit einer spezifischen Übersetzung (zum Beispiel einem Übersetzungsminimum oder -maximum) oder um eine von außen vorgegebene Nullposition.

Wie erwähnt, können also die den Zusammenhang beschreibenden Informationen in Form einer Kennlinie oder als Datentabelle vorliegen

Erfindungsgemäß werden die den Zusammenhang beschreibenden Informationen auf Basis eines Vermessens einer Geometrie des Betätigungsglieds ermittelt und insbesondere von dessen Verzahnung.

Zusätzlich und alternativ können erfindungsgemäß die den Zusammenhang beschreibenden Informationen auf Basis von durchgeführten Lenkvorgängen ermittelt werden. Dies betrifft insbesondere die vorstehend erwähnten Varianten definierter und insbesondere kompletter Durchlenk-Vorgänge zum Beispiel während der Fahrzeugproduktion oder aber während einer Laufzeit (das heißt Betriebszeit beziehungsweise nach Auslieferung) des Fahrzeugs.

Weiter kann in diesem Zusammenhang vorgesehen sein, dass während des Durchführens der Lenkvorgänge eine absolute Referenzposition berücksichtigt und/oder ermittelt wird, auf deren Basis dann zum Beispiel eingenommene Lenkpositionen näher bestimmt werden und insbesondere absolute Lenkpositionen. Hierbei kann es sich als Referenzposition, wie vorstehend erwähnt, um:
- Einen Endanschlag der Lenkung;
- Eine Indexmarke für wenigstens einen der Winkelgeber;
- Oder eine Lenkposition, die mit einem bekannten Übersetzungsverhältnis (zum Beispiel dem spezifischen Übersetzungsverhältnis) wie einem Minimum oder Maximum) assoziiert ist, handeln.

Weiter sieht eine Weiterbildung vor, dass das Verfahren ferner den Schritt des Plausibilisierens einer ermittelten Lenkposition mittels eines Fahrzeugmodells umfasst. Bei dem Fahrzeugmodell kann es sich um ein rechnerisches Modell handeln. Diesem können als Eingangsgröße vorbestimmte Fahrzeugparameter insbesondere Betriebsparameter zugeführt werden. Insbesondere kann das Fahrzeugmodell anhand von Raddrehgeschwindigkeit ermitteln, ob aktuell eine Linkskurve oder Rechtskurve durchfahren wird oder eine Geradeausfahrt vorliegt. Diese Information kann dann verwendet werden, um eine ermittelte Lenkposition zu verifizieren, beispielsweise dahingehend, ob diese ebenfalls eine entsprechende Linkskurve, Rechtskurve oder Geradeausfahrt anzeigt. Das Fahrzeugmodell kann zum Beispiel in einem ESP-Steuergerät enthalten sein oder aber in einem hierin geschilderten Lenkungssteuergerät. Es ist zudem gemäß einer weiteren Ausführungsform möglich, den Null-Punkt der Lenkposition durch fahrzeugexterne Eingabevorrichtungen festzulegen, zum Beispiel mittels eines Diagnosetesters. Dies kann im Rahmen bekannter Kalkulierverfahren erfolgen.

Gemäß einer Weiterbildung ist es auch möglich, das Übersetzungsverhältnis anhand der erhaltenen Winkelpositionen zu ermitteln und zu verwenden, um verfahrensgemäß bestimmte Lenkpositionen und/oder anderweitige Messlenkpositionen zu überprüfen und insbesondere zu plausibilisieren. Werden unzulässige Abweichungen festgestellt, zum Beispiel eine zu starke Änderung von einem der Winkelgeber in Anbetracht eines aktuell ermittelten Übersetzungsverhältnisses, können Fehlfunktionen erkannt und entsprechende Gegenmaßnahmen eingeleitet werden. Beispielsweise können
Warnungen ausgegeben werden oder kann softwareseitig in eine Steuerung des Fahrzeuglenksystems eingriffen werden.

Die Erfindung betrifft ferner ein Fahrzeuglenksystem, mit:
- einer Lenkeingangswelle, mit der ein Handlenkmoment des Fahrers auf ein mit den Fahrzeugrädern gekoppeltes Betätigungsglied aufbringbar ist, wobei die Lenkeingangswelle und das Betätigungsglied über eine Getriebestufe mit einer variablen Übersetzung miteinander gekoppelt sind;
- einem Lenkunterstützungsmotor, der dazu eingerichtet ist, eine Unterstützungskraft auf das Betätigungsglied aufzubringen;
- einem ersten Winkelgeber zum Ermitteln einer Winkelposition der Lenkeingangswelle;
- einem zweiten Winkelgeber zum Ermitteln einer Winkelposition des Lenkunterstützungsmotors; und
- einem Lenkungssteuergerät, das Messwerte von dem ersten Winkelgeber und von dem zweiten Winkelgeber erhält, aus denen ein aktuelles Übersetzungsverhältnis ableitbar ist; und das dazu eingerichtet ist, aus den erhaltenen Messwerten die Lenkposition zu ermitteln.

Das Lenkungssteuergerät kann digital und/oder elektronisch betreibbar sein. Es kann dazu eingerichtet sein, Programmanweisungen auszuführen, die zum Beispiel einen Algorithmus definieren oder von einem solchen umfasst sind. Hierdurch kann das Lenkungssteuergerät die geschilderten Ermittlungen vornehmen. Das Lenkungssteuergerät kann wenigstens eine Prozesseinrichtung umfassen mit wenigstens einem Mikroprozessor.

Allgemein kann das Fahrzeuglenksystem sämtliche weiteren Merkmale, Varianten und Weiterbildungen umfassen, um sämtliche der hierin geschilderten Funktionen, Betriebszustände und Verfahrensschritte bereitzustellen. Insbesondere kann das Fahrzeuglenksystem dazu eingerichtet sein, ein Verfahren gemäß jeglicher vorstehender und nachstehender Variante auszuführen. Sämtliche Ausführungen und Erläuterungen zu den Verfahrensmerkmalen können auf die gleichlautenden Merkmale des Fahrzeuglenksystems ebenso zutreffen.

Die Erfindung wird im Folgenden anhand der beigefügten Figuren schematisch erläutert. Es stellen dar:
Fig. 1: Eine schematische Ansicht eines Fahrzeuglenksystems gemäß einem Ausführungsbeispiel der Erfindung, das ein erfindungsgemäßes Verfahren ausführt;
Fig. 2: Eine Darstellung einer Kennlinie des Übersetzungsverhältnisses zum Ermitteln einer eingenommenen Lenkposition;
Fig. 3: Ein beispielhaftes Ablaufschema eines erfindungsgemäßen Verfahrens gemäß einem Ausführungsbeispiel der Erfindung.

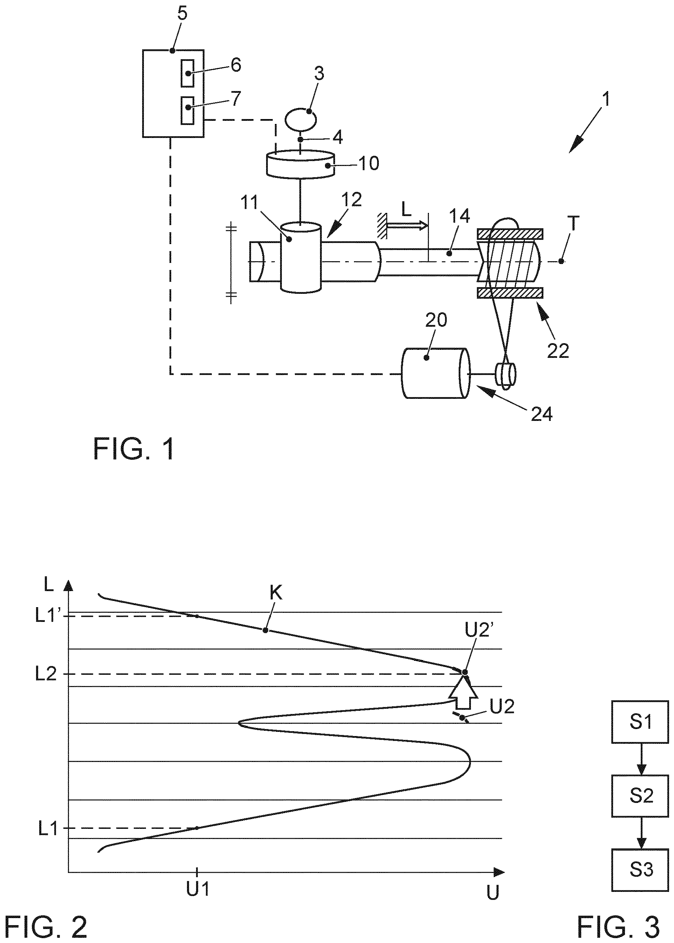

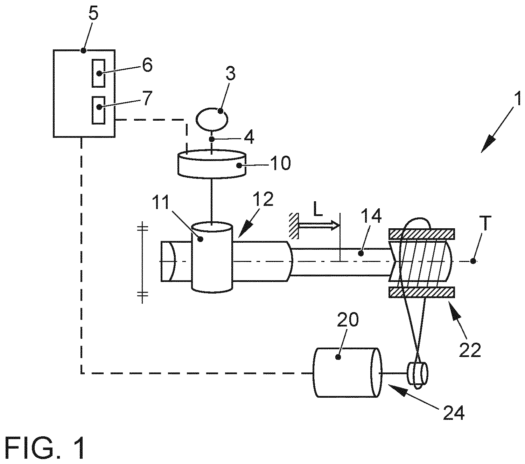

In Figur 1 ist ein erfindungsgemäßes Fahrzeuglenksystem 1 gemäß einem Ausführungsbeispiel der Erfindung gezeigt. Dieses führt ein erfindungsgemäßes Verfahren aus. Das Fahrzeuglenksystem 1 umfasst ein schematisch angedeutetes Lenkungssteuergerät 5 mit wenigstens einer Prozessoreinrichtung 6 und einer Speichereinrichtung 7. Auf der Speichereinrichtung 7 sind bevorzugt Programmanweisungen und/oder Algorithmen hinterlegt, die von der Prozessoreinrichtung 6 ausführbar sind, um die hierin geschilderten Verarbeitungs- und Ermittlungsschritte auszuführen.

Angedeutet ist ferner eine Lenkhandhabe 3 in Form eines Lenkrads, das drehmomentfest mit einer Lenkeingangswelle (oder auch Lenksäule) 4 gekoppelt ist. Es versteht sich dabei, dass sämtliche Darstellungen in Figur 1 nicht realitätsnah hinsichtlich der Größenverhältnisse sind.

Gezeigt ist ferner ein erster Winkelgeber 10, bei dem es sich in dem gezeigten Beispiel um einen relativen Winkelgeber handelt. Dieser ermittelt eine (relative) Winkelposition der Lenkeingangswelle 4. Die Lenkeingangswelle 4 umfasst ferner ein Ritzel 11. Dieses steht in Eingriff mit einem Betätigungsglied in Form einer Zahnstange 14. Nicht gesondert dargestellt ist die Verzahnung dieser Zahnstange 14. Das Ritzel 11 und die Zahnstange 14 beziehungsweise deren Verzahnungen bilden eine Getriebestufe 12. Wie einleitend geschildert, zeichnet sich diese durch eine variable Übersetzung aus, da die Verzahnungsgeometrie der Zahnstange 14 mit variablen Zahnabständen ausgebildet ist.

Bringt der Fahrer über die Lenkhandhabe 3 einen Handlenkmoment auf, rotiert die Lenkeingangswelle 4 um die in Figur 1 vertikale Achse, so dass das Ritzel 11 in an sich bekannter Weise die Zahnstange 14 translatorisch verschiebt. Nicht dargestellte hiermit gekoppelte Fahrzeugkräder können nach Maßgabe dieser translatorischen Verschiebung der Zahnstange 14 ausgelenkt werden.

In dem gezeigten Beispiel richtet sich die ermittelte Lenkposition auf eine Position der Zahnstange 14 entlang dessen translatorischer Bewegungsachse T. Hierfür kann an sich ein beliebiger Referenzpunkt der Zahnstange 14 beziehungsweise dessen Position betrachtet werden und dessen Verschiebung relativ zu einem ebenfalls beliebig wählbaren Ursprung. Eine beispielhafte Erstreckung einer Achse, entlang derer die Lenkposition L bestimmt werden kann, ist in Figur 1 angedeutet. Als Ursprung könnte zum Beispiel auch die Getriebestufe 12 gewählt werden und könnte in die in Figur 1 linke Richtung eine negative Achse und in die in Figur 1 rechte Richtung eine positive Achse definiert werden, entlang derer die Lenkposition L bestimmt wird.

Die Zahnstange 14 ist auch durch einen Lenkunterstützungsmotor 20 verlagerbar. Dieser kann ein Drehmoment auf eine schematisch dargestellten Mutter-Spindel-Kombination 22 aufbringen, um die Zahnstange 14 translatorisch zu verlagern. Es könnte aber in diesem Fall ebenfalls eine Kraftübertragung per Verzahnung vorgesehen werden. In an sich bekannter Weise wird der Lenkunterstützungsmotor 20, selbst bei einer variablen Übersetzung der Getriebestufe 12, angesteuert, um den Fahrer beim Aufbringen der erforderlichen Betätigungskräfte zu unterstützen. Zusätzlich oder alternativ können über den Lenkunterstützungsmotor 20 fahrerautonome Lenkeingriffe von zum Beispiel Fahrerassistenzsystemen erzeugt werden.

Der Lenkunterstützungsmotor 20 umfasst einen zweiten Winkelgeber 24 an sich beliebiger, bevorzugt aber relativer Bauart, mit dem eine Winkelposition des Lenkunterstützungsmotors 20 und, genauer gesagt, einer Ausgangswelle und/oder eines Läufers hiervon in an sich bekannter Weise bestimmbar ist. Hierbei kann es sich um den Winkelgeber herkömmlicher Servomotoren handeln, da auch der Lenkunterstützungsmotor 20 als entsprechend herkömmlicher Servomotor ausgebildet sein kann.

Der erste Winkelgeber 10 und der zweite Winkelgeber 24 liefern beide Messwerte (das heißt, ermittelte Lenkpositionen der Lenkeingangswelle 4 beziehungsweise des Lenkunterstützungsmotors 20) an das Lenkungssteuergerät 5. Je nach dem aktuell vorliegenden Übersetzungsverhältnis der Getriebestufe 12 wird eine Änderung der Winkelposition des ersten Winkelgebers 10 im Verhältnis zu einer Änderung der von dem zweiten Winkelgeber 24 ermittelten Winkelposition anders ausfallen. Durch Vergleichen und insbesondere Bilden eines Quotienten der Winkelpositionsänderungen (zum Beispiel über einen vorbestimmten Bewegungsbereich und/oder ein vorbestimmtes Zeitintervall) kann somit ein aktuell vorliegendes Übersetzungsverhältnis der Getriebestufe 12 ermittelt werden. Weiter kann dann die aktuelle Lenkposition ermittelt werden, die diesem Übersetzungsverhältnis und/oder dem damit zusammenhängenden Eingriffszustand von Zahnstange 14 und Ritzel 11 zuzuordnen ist.

Zusammengefasst sind also in dem Lenkungssteuergerät 5 und genauer gesagt der Speichereinrichtung 7 hiervon Informationen hinterlegt, die den Zusammenhang zwischen Änderungen der Messwerte der Winkelgeber 10, 24 sowie der dabei vorliegenden Lenkposition definieren. Dabei entsprechen die Winkelpositionen der Winkelgeber 10, 24 einem aktuellen Übersetzungsverhältnis, insbesondere, wenn diese miteinander verglichen und/oder in ein Verhältnis zueinander gesetzt werden.

Allgemein kann somit also anhand der Winkelpositionen der Lenkeingangswelle 4 und vorzugsweise als ein gesonderter Verfahrensschritt ein aktuelles Übersetzungsverhältnis bestimmt werden sowie eine diesem Übersetzungsverhältnis zugeordnete Lenkposition. Es ist aber auch möglich, dieses Übersetzungsverhältnis nicht in jedem Fall rechnerisch zu ermitteln, sondern lediglich diejenigen Messwerte der Winkelgeber 10, 24 zu verwenden, die Übersetzungsverhältnisse definieren und/oder aus denen diese ermittelt werden könnte. Diesen Messwerten kann dann in der vorstehend erläuterten Weise zum Beispiel per Kennlinie oder einer Tabelle die aktuelle Lenkposition zugeordnet werden, ohne dass Berechnungen zwingend sind (d.h. das Übersetzungsverhältnis kann auch ein- oder abgelesen werden, ohne Berechnungen durchzuführen).

Weiter ist festzuhalten, dass in Figur 1 das Fahrzeuglenksystem 1 und insbesondere dessen Zahnstange 14 nicht vollständig abgebildet ist. Dies wird durch eine angedeutete Symmetrieachse im linken Teil von Figur 1 erkennbar gemacht, das heißt, die Zahnstange 14 erstreckt sich in gleicher Weise auch in Figur 1 nach links und ist dort mit einem nicht dargestellten Fahrzeugrad verbunden.

In Figur 2 ist ferner eine Kennlinie K der Zahnstangenübersetzung (das heißt das Übersetzungsverhältnis der Getriebestufe 12) sowie die dabei jeweils eingenommene Lenkposition L gezeigt. Das Übersetzungsverhältnis U ist entlang der horizontalen und die dabei eingenommene Lenkposition L ist entlang der vertikalen Achse aufgetragen. Man erkennt zunächst, dass dasselbe Übersetzungsverhältnis (zum Beispiel U1) bei mehreren Lenkpositionen L1, L1' auftritt. In dem gezeigten Beispiel ist folglich der Zusammenhang aus eingenommener Lenkposition L und aktuellem Übersetzungsverhältnis U nicht eindeutig, da mehrere Lenkpositionen L dasselbe Übersetzungsverhältnis aufweisen.

Prinzipiell ist es möglich, mittels vorstehend erläuterter Plausibilisierung anhand eines Fahrzeugmodells dennoch eine eindeutige Zuordnung vorzunehmen. Es ist aber auch möglich, Änderungen des Übersetzungsverhältnisses U zu ermitteln und mit der Kennlinie K abzugleichen oder, genauer gesagt, darauf basierend zu ermitteln, in welchem Bereich der Kennlinie K man sich aktuell befindet.

Hierfür wird anhand der Messwerte der Winkelgeber 10, 24 das aktuell vorliegende Übersetzungsverhältnis U in dem gezeigten Beispiel von Figur 2 rechnerisch ermittelt. Insbesondere werden die Änderungen der Winkelpositionen der Winkelgeber 10, 24 ermittelt und somit auch eine Änderung des Übersetzungsverhältnisses U bestimmt. In Figur 2 ist das entsprechende Resultat mit U2 bezeichnet. Anschließend kann auf beliebige mathematische Weise und zum Beispiel durch Betrachten einer Ableitung oder allgemein eines Änderungsgradientens, der z.B. als Datentabelle und/oder Funktion hinterlegten Kennlinie K eine Zuordnung der Änderung des Übersetzungsverhältnisses U2 erfolgen. Dies ist in Figur 2 durch einen Pfeil dargestellt, gemäß dem die Änderung des Übersetzungsverhältnisses U2 an die passende Position innerhalb der Kennlinie verschoben wird. Für diese Position kann dann die dazugehörige Lenkposition L2 ermittelt werden.

Anhand von Figur 3 wird abschließend ein Verfahrensschema eines erfindungsgemäßen Verfahrens diskutiert, wie es mit dem Fahrzeuglenksystem 1 aus Figur 1 ausführbar ist. In einem Schritt S1 werden Winkelpositionen der Winkelgeber 10, 24 ermittelt und vorzugsweise Winkelpositionsänderungen hiervon. In einem Schritt S2 wird daraufhin ermittelt, welches sich ändernde Übersetzungsverhältnis U2 aktuell vorliegt. In einem Schritt S3 wird dann, wie anhand von Figur 2 erläutert, die zu diesem sich ändernden Übersetzungsverhältnis U2 passende Position L2 anhand vorhinterlegter Zusammenhangsinformation und im Fall von Figur 2 der Kennlinie K ermittelt.

### Bezugszeichenliste

1 Fahrzeuglenksystem
3 Lenkhandhabe
4 Lenkeingangswelle
5 Lenkungssteuergerät
6 Prozessoreinrichtung
7 Speichereinrichtung
10 Erster Winkelgeber
11 Ritzel
12 Getriebestufe
14 Zahnstange
20 Lenkunterstützungsmotor
22 Mutter-Spindel-Kombination
24 Zweiter Winkelgeber
T Translationsachse
K Kennlinie
U Übersetzungsverhältnis
L1, L1', L2, L Lenkposition
U1, aktuelles Übersetzungsverhältnis
U2, U2' sich änderndes Übersetzungsverhältnis

## Patentansprüche

1. Verfahren zum Ermitteln einer Lenkposition bei einem Fahrzeuglenksystem (1) mit variabler Übersetzung,
wobei das Fahrzeuglenksystem (1) folgendes umfasst:
- eine Lenkeingangswelle (4), mit der ein Handlenkmoment des Fahrers auf ein mit den Fahrzeugrädern gekoppeltes Betätigungsglied (14) aufbringbar ist, wobei die Lenkeingangswelle (4) und das Betätigungsglied (14) über eine Getriebestufe (12) mit einer variablen Übersetzung miteinander gekoppelt sind;
- einen Lenkunterstützungsmotor (20), der dazu eingerichtet ist, eine Unterstützungskraft auf das Betätigungsglied (14) aufzubringen;
- einen ersten Winkelgeber (10) zum Ermitteln einer Winkelposition der Lenkeingangswelle (4);
- einen zweiten Winkelgeber (24) zum Ermitteln einer Winkelposition des Lenkunterstützungsmotors (20),
mit:
- Erhalten von Messwerten von dem ersten Winkelgeber (10) und von dem zweiten Winkelgeber (24), wobei aus den Messwerten ein aktuelles Übersetzungsverhältnis abgeleitet wird;
- Ermitteln der Lenkposition anhand der Messwerte,
**dadurch gekennzeichnet, dass**
für eine Mehrzahl von Lenkpositionen dasselbe Übersetzungsverhältnis vorliegt, wobei zum eindeutigen Zuordnen des Übersetzungsverhältnisses zu einer Lenkposition und dadurch Ermitteln der Lenkposition von jedem Winkelgeber (10, 24) mehrere Messwerte erhalten werden und auch eine Änderung des Übersetzungsverhältnisses in Form einer Zunahme oder Abnahme anhand einer Änderung der Messwerte von jedem Winkelgeber (10, 24) bestimmt wird, sowie dass ein Vergleich des aktuellen Übersetzungsverhältnisses mit Informationen durchgeführt wird, die den Zusammenhang zwischen einer Lenkposition und Werten des Übersetzungsverhältnisses beschreiben, wobei die den Zusammenhang beschreibenden Informationen in Form einer Kennlinie oder als Datentabelle vorliegen und auf Basis eines Vermessens einer Geometrie des Betätigungsglieds (14) oder auf Basis von durchgeführten Lenkvorgängen ermittelt werden.

2. Verfahren nach Anspruch 1,
wobei die Winkelgeber (10, 24) keine über den gesamten zu vermessenden Bewegungsspielraum absolut messenden Winkelgeber (10, 24) sind.

3. Verfahren nach einem der vorangehenden Ansprüche,
ferner **gekennzeichnet durch**:
- Plausibilisieren der ermittelten Lenkposition mittels eines Fahrzeugmodells.

4. Fahrzeuglenksystem (1), mit:
- einer Lenkeingangswelle (4), mit der ein Handlenkmoment des Fahrers auf ein mit den Fahrzeugrädern gekoppeltes Betätigungsglied (14) aufbringbar ist, wobei die Lenkeingangswelle (4) und das Betätigungsglied (14) über eine Getriebestufe (12) mit einer variablen Übersetzung miteinander gekoppelt sind;
- einem Lenkunterstützungsmotor (20), der dazu eingerichtet ist, eine Unterstützungskraft auf das Betätigungsglied (14) aufzubringen;
- einem ersten Winkelgeber (10) zum Ermitteln einer Winkelposition der Lenkeingangswelle (4);
- einem zweiten Winkelgeber (24) zum Ermitteln einer Winkelposition des Lenkunterstützungsmotors (20), und
- einem Lenkungssteuergerät (5), das Messwerte von dem ersten Winkelgeber (10) und von dem zweiten Winkelgeber (24) erhält, und das dazu eingerichtet ist, aus den Messwerten ein aktuelles Übersetzungsverhältnis abzuleiten und aus den erhaltenen Messwerten die Lenkposition zu ermitteln,
**dadurch gekennzeichnet, dass**
für eine Mehrzahl von Lenkpositionen dasselbe Übersetzungsverhältnis vorliegt, wobei zum eindeutigen Zuordnen des Übersetzungsverhältnisses zu einer Lenkposition und dadurch Ermitteln der Lenkposition von jedem Winkelgeber (10, 24) mehrere Messwerte von dem Lenkungssteuergerät (5) erhalten werden und auch eine Änderung des Übersetzungsverhältnisses in Form einer Zunahme oder Abnahme anhand einer Änderung der Messwerte von jedem Winkelgeber (10, 24) bestimmbar ist, sowie, dass das Lenkungssteuergerät (5) eingerichtet ist, einen Vergleich des aktuellen Übersetzungsverhältnisses mit Informationen durchzuführen, die den Zusammenhang zwischen einer Lenkposition und Werten des Übersetzungsverhältnisses beschreiben, wobei die den Zusammenhang beschreibenden Informationen in Form einer Kennlinie oder als Datentabelle vorliegen und auf Basis eines Vermessens einer Geometrie des Betätigungsglieds (14) oder auf Basis von durchgeführten Lenkvorgängen ermittelbar sind.

## Claims

1. Method for determining a steering position in a vehicle steering system (1) having a variable transmission,
the vehicle steering system (1) comprising the following:
- a steering input shaft (4) by means of which a manual steering torque of the driver can be applied to an actuating element (14) coupled to the vehicle wheels, the steering input shaft (4) and the actuating element (14) being coupled to one another via a gear stage (12) having a variable transmission;
- a steering assistance motor (20) configured to apply an assisting force to the actuating member (14);
- a first angle encoder (10) for determining an angular position of the steering input shaft (4);
- a second angle encoder (24) for determining an angular position of the steering assistance motor (20),
the method comprising:
- obtaining measured values from the first angle encoder (10) and from the second angle encoder (24), a present transmission ratio being derived from the measured values;
- determining the steering position on the basis of the measured values,
**characterized in that**
the same transmission ratio is present for a plurality of steering positions, a plurality of measured values being obtained for the unambiguous assignment of the transmission ratio to a steering position and the steering position of each angle encoder (10, 24) being determined thereby and a change in the transmission ratio in the form of an increase or decrease also being determined on the basis of a change in the measured values from each angle encoder (10, 24), and **in that** a comparison is carried out of the present transmission ratio with information which describes the relationship between a steering position and values of the transmission ratio, the information describing the relationship being present in the form of a characteristic or as a data table and being determined on the basis of a measurement of a geometry of the actuating element (14) or on the basis of steering processes carried out.

2. Method according to claim 1,
wherein the angle encoders (10, 24) are not
angle encoders (10, 24) which measure absolutely over the entire movement scope to be measured.

3. Method according to either of the preceding claims,
further **characterized by**:
- plausibility checking of the determined steering position by means of a vehicle model.

4. Vehicle steering system (1) comprising:
- a steering input shaft (4) by means of which a manual steering torque of the driver can be applied to an actuating element (14) coupled to the vehicle wheels, the steering input shaft (4) and the actuating element (14) being coupled to one another via a gear stage (12) having a variable transmission;
- a steering assistance motor (20) which is configured to apply an assisting force to the actuating element (14);
- a first angle encoder (10) for determining an angular position of the steering input shaft (4);
- a second angle encoder (24) for determining an angular position of the steering assistance motor (20), and
- a steering control unit (5), which obtains measured values from the first angle encoder (10) and from the second angle encoder (24) and is configured to derive a present transmission ratio from the measured values and to determine the steering position from the obtained measured values,
**characterized in that**
the same transmission ratio is present for a plurality of steering positions, a plurality of measured values being obtained from the steering control unit (5) for the unambiguous assignment of the transmission ratio to a steering position and the steering position of each angle encoder (10, 24) being determined thereby and a change in the transmission ratio in the form of an increase or decrease also being determinable on the basis of a change in the measured values from each angle encoder (10, 24), and **in that** the steering control unit (5) is configured to carry out a comparison of the present transmission ratio with information which describes the relationship between a steering position and values of the transmission ratio, the information describing the relationship being present in the form of a characteristic or as a data table and being determinable on the basis of a measurement of a geometry of the actuating element (14) or on the basis of steering processes carried out.

## Revendications

1. Procédé permettant de déterminer une position de direction dans un système de direction de véhicule (1) à transmission à variation,
dans lequel le système de direction de véhicule (1) comprend les éléments suivants :
- un arbre d'entrée de direction (4) avec lequel un couple de direction de la main du conducteur peut être appliqué à un organe d'actionnement (14) couplé aux roues de véhicule, l'arbre d'entrée de direction (4) et l'organe d'actionnement (14) étant couplés l'un à l'autre par l'intermédiaire d'un étage d'engrenage (12) comportant une transmission à variation ;
- un moteur d'assistance à la direction (20) conçu pour appliquer une force d'assistance sur l'organe d'actionnement (14) ;
- un premier capteur angulaire (10) permettant de déterminer une position angulaire de l'arbre d'entrée de direction (4) ;
- un second capteur angulaire (24) permettant de déterminer une position angulaire du moteur d'assistance à la direction (20),
comportant :
- l'obtention de valeurs de mesure provenant du premier capteur angulaire (10) et provenant du second capteur angulaire (24), un rapport de transmission actuel étant dérivé à partir des valeurs de mesure ;
- la détermination de la position de direction sur la base des valeurs mesurées,
**caractérisé en ce que**
pour une pluralité de positions de direction, le même rapport de transmission est présent, pour l'attribution sans équivoque du rapport de transmission à une position de direction et ainsi pour la détermination de la position de direction à partir de chaque capteur angulaire (10, 24), plusieurs valeurs de mesure étant obtenues, et une variation du rapport de transmission étant également définie sous la forme d'une augmentation ou d'une diminution en fonction d'une variation des valeurs de mesure provenant de chaque capteur angulaire (10, 24), **et en ce qu'**une comparaison du rapport de transmission actuel avec des informations décrivant la relation entre une position de direction et des valeurs du rapport de transmission est effectuée, les informations décrivant la relation se présentant sous la forme d'une courbe caractéristique ou d'un tableau de données et étant déterminées sur la base d'un mesurage d'une géométrie de l'organe d'actionnement (14) ou sur la base d'opérations de direction effectuées.

2. Procédé selon la revendication 1,
dans lequel les capteurs angulaires (10, 24) ne sont pas des capteurs angulaires (10, 24) mesurant de manière absolue sur toute la marge de mouvement à mesurer.

3. Procédé selon l'une des revendications précédentes,
en outre **caractérisé par** :
- le fait de rendre plausible la position de direction déterminée au moyen d'un modèle de véhicule.

4. Système de direction de véhicule (1), comportant :
- un arbre d'entrée de direction (4) avec lequel un couple de direction de la main du conducteur peut être appliqué à un organe d'actionnement (14) couplé aux roues de véhicule, l'arbre d'entrée de direction (4) et l'organe d'actionnement (14) étant couplés l'un à l'autre par l'intermédiaire d'un étage d'engrenage (12) comportant une transmission à variation ;
- un moteur d'assistance à la direction (20) conçu pour appliquer une force d'assistance sur l'organe d'actionnement (14) ;
- un premier capteur angulaire (10) permettant de déterminer une position angulaire de l'arbre d'entrée de direction (4) ;
- un second capteur angulaire (24) permettant de déterminer une position angulaire du moteur d'assistance à la direction (20), et
- un appareil de commande de direction (5) obtenant des valeurs de mesure provenant du premier capteur angulaire (10) et provenant du second capteur angulaire (24) et configuré pour dériver un rapport de transmission actuel à partir des valeurs de mesure et pour déterminer la position de direction à partir des valeurs de mesure obtenues,
**caractérisé en ce que**
pour une pluralité de positions de direction, le même rapport de transmission est présent, pour l'attribution sans équivoque du rapport de transmission à une position de direction et ainsi pour la détermination de la position de direction à partir de chaque capteur angulaire (10, 24), plusieurs valeurs de mesure provenant de l'appareil de commande de direction (5) étant obtenues, et une variation du rapport de transmission pouvant également être définie sous la forme d'une augmentation ou d'une diminution en fonction d'une variation des valeurs de mesure provenant de chaque capteur angulaire (10, 24), **et en ce que** l'appareil de commande de direction (5) est configuré pour effectuer une comparaison entre le rapport de transmission actuel et des informations décrivant la relation entre une position de direction et des valeurs du rapport de transmission, les informations décrivant la relation se présentant sous la forme d'une courbe caractéristique ou d'un tableau de données et pouvant être déterminées sur la base d'un mesurage d'une géométrie de l'organe d'actionnement (14) ou sur la base d'opérations de direction effectuées.
